# EUROPEAN PATENT APPLICATION

(11) **EP 4 706 867 A1**
(43) Date of publication of application: **11.03.2026**
(21) Application number: 25200711.7
(22) Date of filing: 08.09.2025
(51) Int. Cl.: B23K 26/082, B23K 26/08, B23K 26/352, B23K 26/36, B23K 26/362, B23K 31/02, B23K 37/04

(54) **METHOD FOR LASER PROCESSING A PROCESSING SURFACE OF A WORKPIECE**

(30) Priority: 09.09.2024 EP 24199306
(71) Applicant: Agathon AG, Maschinenfabrik, 4512 Bellach (CH)
(72) Inventor: Marti, Jürg, 4500 Solothurn (CH); Amport, Jonas, 4528 Zuchwil (CH); Pfaff, Josquin, 8003 Zürich (CH); von Ballmoos, Reto, 4512 Bellach (CH)
(74) Representative: BOVARD AG

(57) **Abstract**

The present invention relates to a laser processing method (100) and device (200), in particular for processing a processing surface (5) of any shape of a workpiece (2), preferably a curved surface of a cutting tool, wherein through simultaneous orientation of a workpiece (2) and movement of a laser beam (205) across a processing surface (5) of the workpiece (2) a processing volume (4) is removed from the workpiece (2) to expose a final surface (3).

## Description

### Technical field of the invention

The present invention relates to a laser processing method and device, in particular for processing a surface of any shape of a workpiece, preferably a curved surface of a cutting tool.

### Background of the invention

Processing a surface of a workpiece made from hard and/or brittle material such as metals, like stainless steel, light metals such as titanium, magnesium and aluminum, or ceramic, cermet, tungsten carbide, PCD diamond, CVD diamond, PCBN, and the like, with or without coating to a certain surface characteristic or within certain tolerances is known to be difficult. For example, grinding a cutting tool, for example an indexable insert, made of superhard material and achieve a precise cutting edge is a challenge. To process the surface of such workpieces, laser machining methods and devices are generally known.

These methods and devices usually comprise a laser beam generation device and an optical system to direct the laser beam onto the surface of a workpiece to be processed. The impingement of the laser beam onto that surface locally melts, vaporizes and/or ablates material from the workpiece to produce a desired shape of the surface within certain tolerances and/or with certain surface characteristics. In particular the energy which is transferred from the laser beam to the workpiece due to said impingement of the laser beam onto a surface of the workpiece may be adjusted through so-called modulation of the laser, that is, changing the pulse rate, laser power, and other parameters and/or interrupt the laser beam.

The location of the impingement point on the workpiece may be controlled by moving one or both of the laser beam and the workpiece relative to one another. State of the art devices usually comprise a laser source to generate a laser beam and a scanner unit through which the laser beam propagates and which is configured to move the laser beam along so-called optical axes by means of lenses or mirrors as well as a holder, configured to support the workpiece and move it along so-called mechanical axes by means of drive units.

Due to the properties of the laser beam and the scanning unit, movement of the laser beam along the optical axes is much faster, i.e. more dynamically, than the movement of the workpiece along the mechanical axes. Furthermore, the maximum movement velocity along the mechanical axes is limited by a higher mass of the respective components and inertia of the drive units. To accustom these differences, usually the movement along the mechanical axes is controlled by a first controller and the movement along the optical axes is controlled by a second controller.

With such devices, a curved surface, such as the surface along the tip radius of an indexable insert, can be processed using two different methods. First the workpiece can be oriented into a position and the machining is done by the scanning of the laser beam along the surface of said workpiece. When using such a method, the incidence angle of the laser beam to the surface fluctuates depending on the curvature of the surface, thus changing the properties of the processing, e.g. processing rate, resulting surface roughness. A known way to limit this shortcoming is to divide the surface into segments with an approximately constant incidence angle within that segment, however this approach only limits the effects of a fluctuating incidence angle but does not eliminate them. Another known way to approach this issue is to use the scanning unit to move the laser beam along a repetitive first predefined path and to use the holder to move the workpiece along a second predefined path, wherein this first and second predefined path overlap in such a manner that the incidence angle of the laser beam with respect to the surface to be processed remains constant while the laser beam is being moved across the surface to be processed, similar to a milling process, where the laser beam's repetitive first predefined path represents the milling tool. The latter approach however requires the optical axes and the mechanical axes to be redundant, i.e. the optical axes and the mechanical axes provide a similar range of motion. Due to this redundancy, additional complexity is introduced to the device which increases the susceptibility to errors, maintenance effort, and cost. Another drawback is that the repetitive first predefined path cannot be dynamically altered depending on the position on the surface.

From EP 2 314 412 B2 a laser processing method is known, wherein a laser is directed through a scanning unit onto a workpiece surface along a repetitive and predetermined sequence of incidence points to act as a virtual tool. Through a plurality of redundant mechanical axes said virtual tool and the workpiece are movable relative to each other. By moving the workpiece relative to the virtual tool material is removed from the workpiece and a surface is machined.

From DE 10 2018 125 436 A1 a similar method for laser processing a workpiece is known, wherein material is removed from said workpiece by focussing a laser through a scanner onto the surface of the workpiece with an incidence angle in a predetermined range and wherein the laser is moved in a specific pattern to act as a virtual tool. The virtual tool and the workpiece are movable relative to each other using several mechanical and optical axes, which at least to some degree, are redundant to each other.

Therefore, an object of the invention is to provide a method and device for laser processing a surface of any shape of a workpiece, preferably a curved surface of a cutting tool, resulting in a high surface quality. By using the method and device according to the invention, processing time and energy input into the workpiece through the laser can be minimized. Moreover, such laser processing method and device omit the requirement for redundant components, thus reducing investment cost, operational cost, while increasing reliability and accuracy.

### Summary of the invention

According to one aspect of the invention, there is provided a method for laser processing a processing surface of a workpiece, comprising:
- generating a laser beam propagating through a scanning unit along a scanner axis,
- providing the workpiece which is supported and held in a holder, and which is positionable relative to the scanner axis,
wherein the method further comprises steps,
a) defining a processing volume of the workpiece, which processing volume extends in an essentially perpendicular direction from a processing surface,
b) defining a reference path, wherein the workpiece is orientable with respect to said reference path,
c) defining a laser path, which is at least partially overlapping with the processing surface,
d) orienting the workpiece with respect to the reference path,
e) moving the laser beam along the laser path, wherein the laser beam passes across the processing surface and the processing volume is removed from the workpiece to expose a final surface,
and wherein the steps d) and e) are performed essentially simultaneously.

According to the invention, orienting the workpiece with respect to the reference path and moving the laser beam along the laser path, wherein the laser beam passes across the processing surface and the processing volume is being removed from the workpiece, are performed essentially simultaneously. To achieve a simultaneous orientation of the workpiece with respect to the reference path and movement of the laser beam along the laser path, the position-ability provided by the workpiece holder and the scanning of the laser beam provided by the scanning unit must be synchronized to each other. Preferably, the orientation of the workpiece with respect to the reference path is a continuous movement to minimize manufacturing time and orientational errors occurring from stopping and restarting the orientation of the workpiece with respect to the reference path. Moreover, the laser beam may be modulated and/or the speed with which the laser beam is moved along the laser path may be changed depending on the relative position of the laser beam on the laser path. Laser modulation and/or changes to the speed with which the laser beam is moved along the laser path have an influence on several aspects of the laser processing and may preferably be used to achieve a homogeneous energy distribution across the processing surface, which is of particular interest when the workpiece is being accelerated or decelerated.

According to an embodiment, the processing volume defined in step a) is subdivided into n layers, each layer determined by a partial processing surface and a thickness with n > 1, wherein each of the n layers defines a partial processing volume of this layer which is processed according to the steps b) to e) and the method includes defining a partial reference path for every layer and repeating the steps b) to e) until the processing volume has been removed from the workpiece and a final surface is exposed. Dividing the processing volume into multiple partial processing volumes enables processing each of the n layers separately until the total processing volume is removed and a final surface is exposed, which may result in a further optimized processing speed and resulting surface quality. By reversing the direction of the orientation of the workpiece with respect to the reference path and/or the direction of movement of the laser beam along the laser path while switching from processing one layer to processing a subsequent layer, further increases in processing speed may be attainable. The partial reference path of any layer may be identical or different to the partial reference path of a preceding and/or subsequent layer.

In one embodiment, the reference path is defined by a feature of a partial processing surface or by a feature of the final surface of the workpiece, preferably a cutting edge. Hence in step d) the workpiece is oriented with respect to said feature of the workpiece and facilitates the processing of a processing surface of the workpiece with that feature, preferably a cutting edge.

According to a further embodiment, the laser path intersects the reference path in at least one intersection point, wherein the scanner axis and an axis perpendicular to the surface of the workpiece, at said intersection point, enclose an angle within a predetermined range. The intersection point between the reference path and the laser path may be arranged on the part of the laser path that is overlapping with the processing surface, in which case the reference path overlaps the processing surface at least partially as well. The workpiece is orientable with respect to the reference path to facilitate that the scanner axis and an axis perpendicular to the processing surface of the workpiece enclose an angle within a predetermined range at the intersection point of the laser path and the reference path, wherein said angle may vary within said predetermined range from a predetermined value, preferably vary by not more than +/- 5°, preferably not more than +/- 1°, depending on the relative position of the workpiece . Such an orientation with respect to the reference path may include rotation about one or more rotational axes and/or movement along one or more translational axes. Apart from said intersection point, the angle between the scanner axis and an axis perpendicular to the processing surface of the workpiece depends on the processing surface and/or the final surface of the workpiece and may or may not be equal to the predetermined angle at the intersection point of the laser path and the reference path. Likewise said angle may or may not be constant along the movement of the laser beam along the laser path.

In yet another embodiment of the invention, the angle within a predetermined range remains constant for every iteration of step c). This ensures constant laser processing characteristics, for example processing rate, obtainable surface quality and other processing characteristics, at the intersection point of the reference path and the laser path for every iteration of step c). This is especially beneficial when the reference path is defined by a feature of a processing surface or of the final surface of the workpiece, preferably a cutting edge, since said constant laser processing characteristics are then ensured along said feature of a surface of the workpiece.

In advantageous manner, the final surface of the workpiece and the processing surface are essentially parallel to each other. Thus, the processing volume extends essentially orthogonal with respect to the surface of the workpiece.

In another advantageous manner, the final surface of the workpiece and the processing surface are essentially orthogonal to each other. **In** this case, the processing volume extends essentially parallel to the surface of the workpiece. Depending on the shape of the final surface it may be beneficial to either define a processing surface parallel or orthogonal to the final surface.

In another embodiment, the direction of orientation of the workpiece with respect to the reference path and the direction of movement of the laser beam are essentially orthogonal to each other. This strategy enables high processing rates without compromising the obtainable surface quality of the surface of the workpiece.

In one embodiment, the laser path is defined so as to achieve a homogeneous energy input across the processing surface which further increases the obtainable surface quality of the surface of the workpiece.

In a further embodiment, the laser path's definition in the workpiece coordinate system is a superposition of at least two movement paths, preferably a superposition of a meander-shaped path and the reference path or a superposition of a spiral path and the reference path. Due to the high pulse rate and areal energy density of common laser systems, the laser beam must move much faster along the laser path than the workpiece is orientable using mechanical axes. In that the laser path, is a superposition of at least two paths, preferably a superposition of a meander-shaped path and the reference path or a superposition of a spiral path and the reference path, a homogeneous energy input to the processing surface is achieved, which in turn enables homogeneously obtainable surface properties, such as surface quality and reduces the energy requirement of the process. With respect to the workpiece, a workpiece coordinate system is definable, which workpiece coordinate system is fixed to the workpiece and thus moves according to the orientation of the workpiece.

In further advantageous manner, the laser is being modulated depending on the relative position of the laser beam on the laser path, preferably depending on the laser beam passing across the processing surface. This ensures that solely the processing surface is subject to energy input from the laser and any unwanted energy input from the laser to the workpiece or to other components, for example the workpiece holder, drive units, parts of a machine housing, etc., is omitted. In doing so, further improvements to the surface quality of the surface of the workpiece and further reductions of the energy requirements of the process are achievable.

In another embodiment the laser is being modulated depending on the relative position of the laser beam on the laser path in order to achieve a homogeneous energy distribution along the processing surface, while the scanning speed along the laser path is not constant. This is of particular interest when the workpiece is being accelerated or decelerated.

According to an embodiment of the invention, the surface of the workpiece and/or the processing surface is a curved surface. Hence, the processing volume may be a cuboid, part of a sphere, part of a pyramid part of a cylinder, or any geometrical body extending in an essentially perpendicular direction from a flat or curved processing surface.

In a further embodiment, the workpiece is a tool, preferably a cutting tool, even more preferably an indexable insert or a rotational cutting tool. The surface of the workpiece, which is processed using a method according to the invention, may form part and/or be adjacent to a cutting edge of said cutting tool.

In another embodiment, the scanner axis and an axis perpendicular to the surface of the workpiece, at the intersection point enclose a predetermined angle, which predetermined angle remains constant throughout the orientation of the workpiece with respect to the reference path.

According to yet another embodiment, the laser path comprises at least one processing segment and at least one transfer segment, wherein the shape of the laser path in the at least one processing segment is definable according to a first set of conditions and the shape of the laser path in the at least one transfer segment is definable according to a second set of conditions. Herein, the at least one processing segment corresponds at least partly with the part of the laser path which is overlapping with the processing surface and the shape of said processing segment may be defined according to a first set of conditions in order to achieve optimal processing conditions. While the laser beam is being moved along the transfer segment, the laser beam may be interrupted, and hence, movement of the laser beam along the transfer segment does not contribute to the actual laser processing of a processing surface, i.e. removal of the processing volume. The shape of the at least one transfer segment may thus be defined according to a second set of conditions considering kinematical restrictions, e.g. maximal speed with which the laser beam can be moved along the laser path. However, other conditions can also be used within this second set of conditions that is used for defining the shape of the laser path in the at least one transfer segment. These other conditions can in particular comprise the time period available for processing, maximal acceleration achievable with the laser beam, maximal tolerable jolt or jerk value, total scan volume and/or accessibility of processing points by the laser beam.

According to a further embodiment, during laser processing of the processing surface, the workpiece is clamped in a clamping device by application of a clamping force parallel to a clamping axis and is rotatable about the clamping axis for orienting the workpiece with respect to the reference path.

Preferably, the clamping axis and an axis perpendicular to the processing surface of the workpiece enclose an angle, more preferably an angle of 90°. Equally preferably, the clamping force is applied to a first face of the workpiece and supported on a second face of the workpiece, which first and second face are different from the processing surface. Even more preferably, the first and second faces are opposing faces of the workpiece, most preferably, the first and second faces are perpendicular to the processing surface.

When clamped in such a manner, the workpiece may be oriented with respect to the reference path with little to no acceleration or deceleration even when the shape of a processing surface changes along the reference path, for example when the processing surface comprises a flat surface area and a curved surface area. This is particularly beneficial in cases where an angle between an axis perpendicular to the processing surface and the scanner axis shall remain constant for the movement of a laser beam along a laser path. In this way, the removal rate of a processing volume from the workpiece by the laser beam may be increased thus enabling a reduced processing time.

Additionally, laser processing a processing surface of a workpiece clamped in this way may be conducted in a single clamping operation, that is, the workpiece does not need to be clamped in a first orientation, released from the clamping device and clamped again in a second orientation, for laser processing the processing surface.

The invention further relates to a clamping device for clamping a workpiece during laser processing of a processing surface, which clamping device comprises a drive unit comprising a drive anvil supported in an actuation drive, said drive anvil being rotationally driveable for rotary orienting the workpiece by means of the actuation drive, and a support unit provided to be mounted on the clamping unit and comprising a clamping anvil rotatable about a support axis, and wherein either or both of the drive anvil and the clamping anvil are translationally drivable to apply a clamping force parallel to a clamping axis for clamping the workpiece between the drive anvil and the clamping anvil.

The drive anvil is translationally drivable to apply a clamping force parallel to a clamping axis and the clamping anvil supports said clamping force for securely clamping and holding a workpiece between the drive anvil and the clamping anvil. Alternatively, or additionally, the clamping device may comprise further driving means for translationally driving the clamping anvil and the clamping anvil may be provided in the support unit in a translationally drivable manner.

Preferably, the actuation drive is provided for rotationally driving the drive anvil about the clamping axis and the support axis extends essentially coaxial to the clamping axis.

In a preferred way, the drive unit is mounted to a laser processing device and the support unit is mounted on the drive unit. Alternatively, the support unit may be mounted to a laser processing device and the drive unit may be mounted to the support unit or both, the drive unit and the support unit may be mounted to a laser processing device.

Preferably, the clamping device is rotationally drivable or translationally drivable with respect to a laser processing device. Even more preferably, the clamping device is rotationally drivable and translationally drivable with respect to a laser processing device.

When clamping a workpiece during laser processing of a processing surface using the clamping device according to the invention, the workpiece may be rotary oriented with little to no acceleration or deceleration. Hence, the actuation drive does not need to facilitate high acceleration or deceleration, and a more cost-efficient actuation drive may be employed.

A second aspect of the present invention relates to a clamping device for clamping a workpiece during laser processing of a processing surface, characterized in that the clamping device comprises
- a drive unit comprising a drive anvil supported in an actuation drive, said drive anvil being rotationally driveable for rotary orienting the workpiece by means of the actuation drive, and
- a support unit provided to be mounted on the drive unit and comprising a clamping anvil rotatable about a support axis,
wherein either or both of the drive anvil and the clamping anvil are translationally drivable to apply a clamping force parallel to a clamping axis for clamping the workpiece between the drive anvil and the clamping anvil.

Preferably, the clamping anvil is provided translationally fixed in the support unit for supporting the clamping force and the drive anvil is translationally drivable to apply the clamping force parallel to the clamping axis for clamping the workpiece between the drive anvil and the clamping anvil.

Moreover, the invention relates to a laser processing device for laser processing a surface of a workpiece with the method according to the invention, comprising
- a laser system with a scanner unit comprising means to focus a laser beam and at least two optical axis configured to generate a laser beam along a scanner axis, to direct the laser beam onto a workpiece and to move the laser beam along a defined laser path,
- a holder for supporting and holding the workpiece and movable about at least one mechanical axis by means of drive units of the laser processing device,
- a controller configured to move the laser beam along a defined laser path and to control the drive units to orient the workpiece with respect to a reference path.

The controller may comprise a suitable processing unit for settings for controlling system hardware and processes, software and/or memory for operation of the laser processing device to perform the laser processing method.

According to an embodiment the laser processing device for laser processing a surface of a workpiece is characterized, in that it comprises a controller to synchronously control both the at least one optical axis and the at least one mechanical axis. By employing a controller to synchronously control both the at least one optical axis and the at least one mechanical axis, it is possible to simultaneously orient the workpiece with respect to the reference path and move the laser beam along the laser path without the at least one optical axis and the at least one mechanical axis being redundant, that is providing a similar range of motion. Hence the requirement for redundant components is omitted, thus reducing investment cost, operational cost, and susceptibility to errors.

In a further embodiment, the laser processing device for laser processing a processing surface of a workpiece comprises a clamping device according to the second aspect of the invention for clamping the workpiece during laser processing of the processing surface.

### Brief Description of the Drawings

For a more complete understanding of the invention and the advantages thereof, exemplary embodiments of the invention are explained in more detail in the following description with reference to the accompanying figures, in which like reference characters designate like parts and in which:
Figure 1 shows a workpiece with a first reference path and a first processing volume in a first orientation according to one embodiment of the invention,
Figure 2 is a schematic view of a workpiece with a first reference path in a first orientation and a first laser path according to one embodiment of the invention,
Figure 3A illustrates a laser beam propagating along a scanner axis and hitting a workpiece at an angle in a first orientation of the workpiece,
Figure 3B illustrates a laser beam propagating along a scanner axis and hitting a workpiece at an angle in a second orientation of the workpiece,
Figure 3C illustrates a laser beam propagating along a scanner axis and hitting a workpiece at an angle in a third orientation of the workpiece,
Figure 4A shows a workpiece with a second reference path and a second processing volume in a second orientation according to one embodiment of the invention,
Figure 4B shows a workpiece with a second reference path and a second processing volume in a second orientation according to one alternative embodiment of the invention,
Figure 5 is a schematic illustration of one embodiment of the method according to the invention,
Figure 6 is a schematic view of an embodiment of the laser processing device according to the invention, and
Figure 7 is a schematic view of a clamping device for clamping a workpiece according to an aspect of the present invention.

### Detailed Description of the Illustrated Embodiments

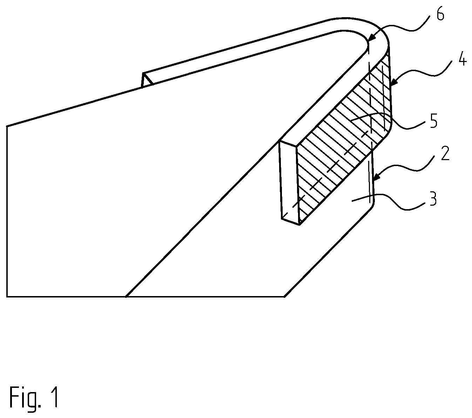

Figure 1 illustrates a workpiece 2 with a processing surface 5, which is subject to a laser processing method 100 according to the invention, whose steps are being explained in more detail later on. Figure 1 further shows a processing volume 4, which processing volume 4 extends in an essentially orthogonal direction from the processing surface 5. According to the embodiment of the invention shown in figure 1, the processing surface 5 and the final surface 3 of the workpiece 2 are essentially parallel to each other. The reference path 6 is defined by an edge of the workpiece 2. During laser processing of the processing surface 5 of the workpiece 2, the workpiece 2 is being supported and held in a holder (not shown) and is orientable with respect to the reference path 6. According to embodiments of the invention, the processing volume 4 may be subdivided into n layers, each layer determined by a partial processing surface (not shown) and a thickness with n > 1, wherein each of the n layers defines a partial processing volume (not shown) of this layer. Preferably any partial processing surface is parallel to the processing surface 5.

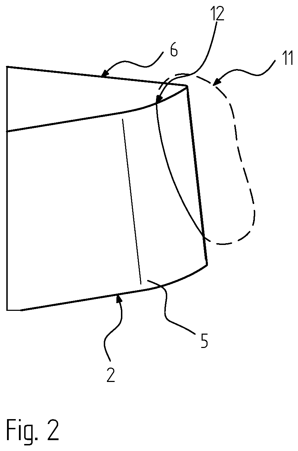

Figure 2 shows the workpiece 2 with the reference path 6 being defined by an edge of the workpiece 2. During processing with the laser processing method 100, the workpiece 2 is oriented with respect to the reference path 6 and simultaneously, a laser beam (not shown) is moved along a laser path 11, which laser path 11 is at least partially overlapping with the processing surface 5 (continuous part of laser path 11), and which, according to an embodiment, intersects the reference path 6 in at least one intersection point 12. Figure 2 shows a preferable embodiment, wherein intersection point 12 is arranged on the overlapping portion of the laser path 11 and the processing surface 5.

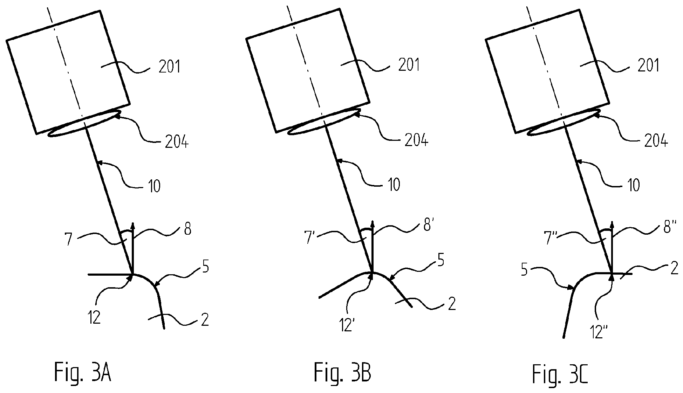

The orientation of a workpiece 2 with respect to a reference path (not shown) as well as part of a laser processing device 200 according to the invention can be seen in figures 3A, 3B and 3C. A laser beam (not shown) propagates through a scanning unit 201 along a scanning axis 10 and is being focused by means to focus a laser beam 204.

Figure 3A shows a workpiece 2 in a first orientation with respect to the reference path, wherein a scanner axis 10 of a scanner unit 201 meets a processing surface 5 of a workpiece 2 at a first intersection point 12 and wherein a scanner axis 10 and an axis 8 perpendicular to a surface 3 of a workpiece 2 enclose a first predetermined angle 7 at said first intersection point 12. Figure 3B shows a workpiece 2 in a second orientation with respect to the reference path, wherein a scanner axis 10 meets a processing surface 5 in a second intersection point 12' and wherein a scanner axis 10 and an axis 8' perpendicular to a processing surface 5 of a workpiece 2 enclose a second predetermined angle 7' at said second intersection point 12'. Figure 3C illustrates a workpiece 2 in a third orientation with respect to the reference path, wherein a scanner axis 10 meets a processing surface 5 in a third intersection point 12" and wherein a scanner axis 10 and an axis 8" perpendicular to a processing surface 5 of a workpiece 2 enclose a third predetermined angle 7" at said third intersection point 12". According to an embodiment of the invention, the predetermined angle 7, 7', 7" remains constant for every iteration of the laser processing method 100.

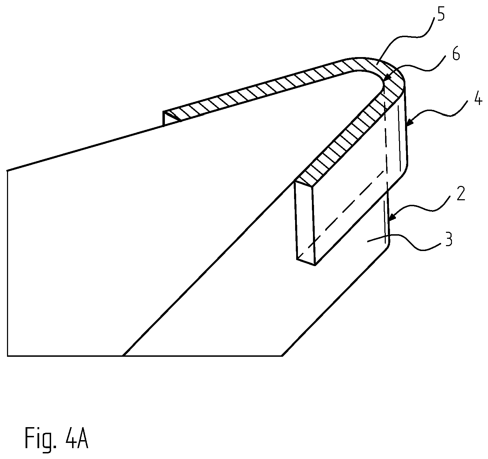

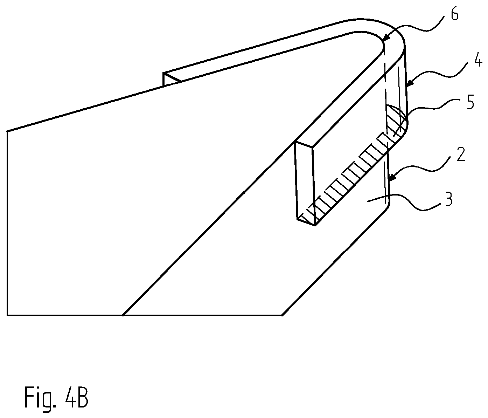

Two another embodiments of the invention are shown in figures 4A and 4B, wherein a workpiece 2 with a processing surface 5 is subject to a laser processing method 100 according to the invention. Both figure 4A and 4B further show a processing volume 4, which processing volume 4 extends in an essentially orthogonal direction from the processing surface 5. According to the embodiments of the invention shown in figures 4A and 4B, the processing surface 5 and the final surface 3 of the workpiece 2 are essentially orthogonal to each other. The difference between these two embodiments of the invention resides in the relative position of the processing surface 5: While the processing surface 5 is positioned at the upper side of the processing volume 4 in figure 4A, it is positioned at the lower side of the processing volume 4 in figure 4B. In other words, these two embodiments of the invention basically only differ by the direction in which the processing volume 4 is processed until the final surface 3 has been achieved.

In figures 1, 2 and 4, the processing surface 5 and the final surface 3 of a workpiece 2 have been illustrated as a curved surface along the reference path 6 and as a flat surface perpendicular to the reference path 6 to facilitate an easier understanding of the figures. However, according to embodiments of the present invention, the final surface 3 and the processing surface 5 of a workpiece 2 may as well be a curved surface along multiple directions, which is particularly beneficial if the workpiece 2 is a cutting tool, preferably an indexable insert or a rotational cutting tool.

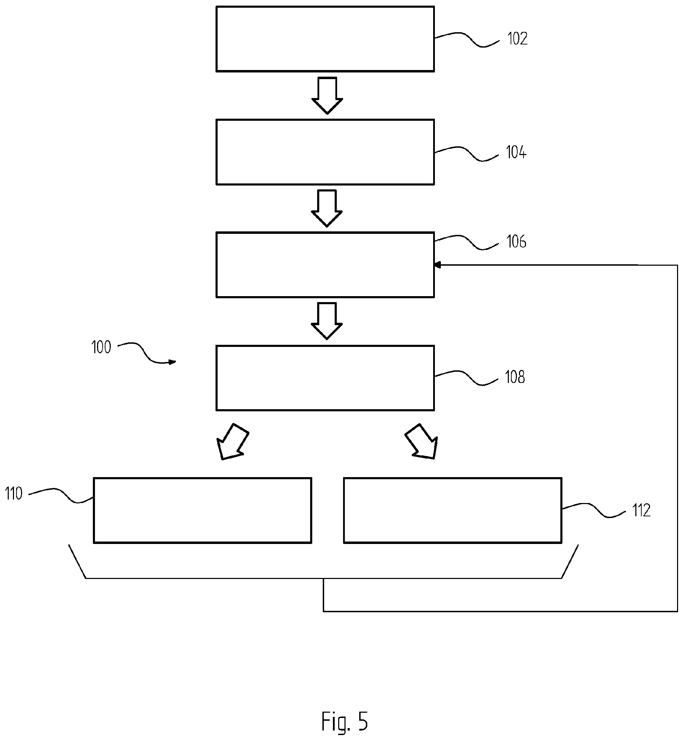

Figure 5 illustrates steps 102, 104, 106, 108, 110 and 112 of the laser processing method 100 according to the invention. According to an embodiment of the invention, method 100 includes a preliminary step 102, wherein a laser beam 205 is generated and propagates through a scanning unit 201 along a scanner axis 10 and wherein the workpiece 2 is provided, which workpiece 2 is supported and held in a holder 210, and which is positionable relative to the scanner axis 10.

The example method 100 further includes a step 104, wherein a processing volume 4 of the workpiece 2 is defined, which processing volume 4 extends in an essentially perpendicular direction from a processing surface 5. The method 100 also includes a step 106, wherein a reference path 6 is defined and wherein the workpiece 2 is orientable with respect to said reference path 6. The laser processing method 100 further includes a step 108, in which a laser path 11 is defined, which laser path 11 is at least partially overlapping with the processing surface 5, and which intersects the reference path 6 in at least one intersection point 12, wherein the scanner axis 10 and an axis 8 perpendicular to the processing surface 5 of the workpiece 2 enclose a predetermined angle 7 at said intersection point 12.

The example method 100 also includes simultaneously performed steps 110 and 112, wherein in step 110 the workpiece 2 is oriented with respect to the reference path 6 and in step 112, the laser beam 205 is moved along the laser path 11, wherein the laser beam 205 passes across the processing surface 5 and the processing volume 4 is removed from the workpiece 2.

As is shown in figure 5, the processing volume 4 defined in step 104 may be subdivided into n layers, each layer determined by a partial processing surface 5' and a thickness with n > 1, wherein each of the n layers defines a partial processing volume 4' of this layer which is processed according to the steps 106 to 112 and the method 100 includes repeating the steps 106 to 112 until the processing volume 4 has been removed from the workpiece 2.

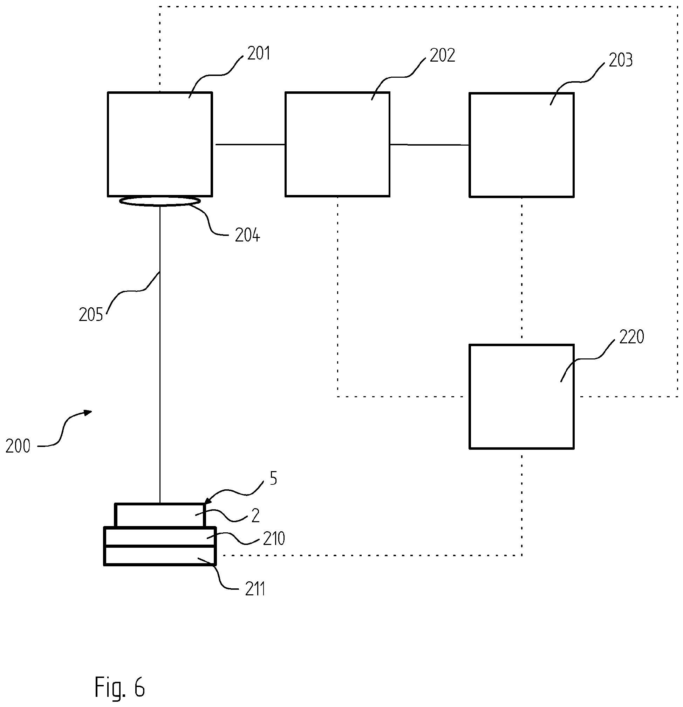

Figure 6 shows a laser processing device 200 for laser processing a surface 3 of a workpiece 2 with the method 100 according to the invention, comprising a laser system with a scanner unit 201, comprising means to focus a laser beam 204 and at least one optical axis configured to generate a laser beam 205 along a scanner axis 10, to direct the laser beam 205 onto a processing surface 5 of the workpiece 2 and to move the laser beam 205 along a defined laser path 11, a holder 210 for supporting and holding the workpiece 2 and movable about at least one mechanical axis by means of drive units 211 of the laser processing device 200, and a controller 220 configured to move the laser beam 205 along a defined laser path 11 and to control the drive units 211 to orient the workpiece 2 with respect to a reference path 6. The laser processing device 200 may further comprise a laser source 203 and an optical system 202 to generate and modulate the laser beam 205.

As can be seen from figure 6, the controller 220 may control both the at least one optical axis and the at least one mechanical axis as well as further components of the laser processing device 200.

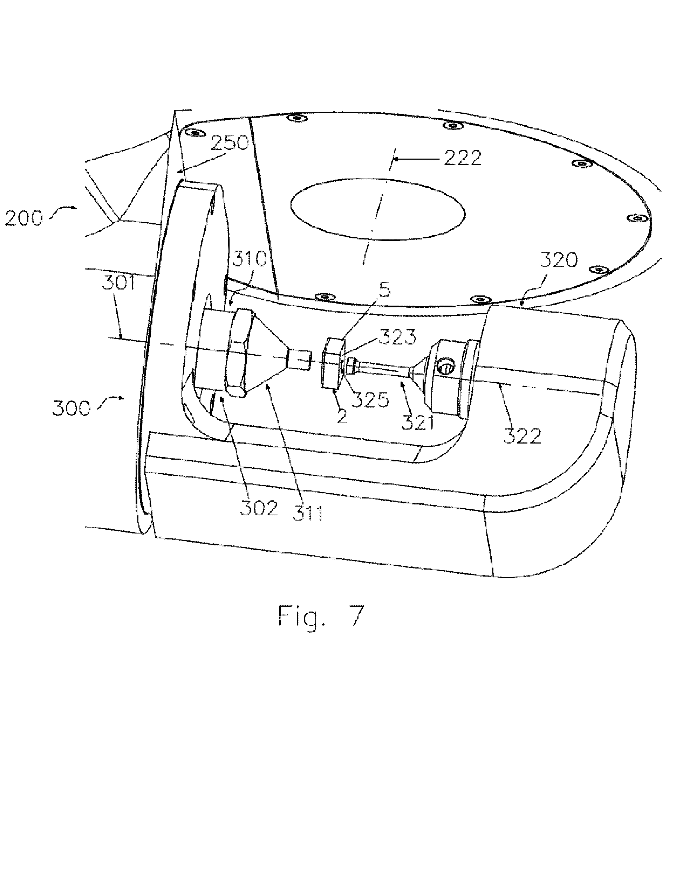

Figure 7 shows a holder 210 provided as a clamping device 300 for clamping the workpiece 2 during laser processing of the processing surface 5. The clamping device 300 comprises a drive unit 310 comprising a drive anvil 311 supported in an actuation drive 302 and a support unit 320 comprising a clamping anvil 321. The drive unit 310 is mounted to a mounting surface 250 of the laser processing device 200 and the support unit 320 is mounted on the drive unit 310.

The clamping device 300 is rotationally drivable about a machine rotation axis 222 of the laser processing device 200 by means of a machine rotation drive (not shown).

The drive anvil 311 is rotationally driveable for rotary orienting the workpiece 2 by means of the actuation drive 302 and translationally drivable to apply a clamping force parallel to a clamping axis 301. The clamping anvil 321 is rotatable about a support axis 322, which extends coaxial to the clamping axis 301, for supporting the clamping force.

For securely clamping and holding the workpiece 2, the drive anvil 311 engages with a first front face (not visible in figure 7) of the workpiece 2 and the clamping anvil 321 engages with a second front face 323 of the workpiece 2. The processing surface 5 does not form part of the first front face or the second front face 323 and the drive anvil 311 and the clamping anvil 321 thus do not cover the processing surface 5, that is, the laser beam (not visible in figure 7) is not limited in passing across the processing surface 5 by the clamping device 300. As shown, the clamping axis 301 and support axis 322 extend through a centre of mass 325 of the workpiece 2. However, it is also possible that the clamping axis 301 and support axis 322 do not extend through the centre of mass 325, i.e. the workpiece 2 is clamped excentrically.

In the embodiment shown in figure 7, the support unit 320 has an L-shape with a longer and a shorter leg, wherein the longer leg of said L-shape extends essentially parallel to the clamping axis 301 and the support axis 322 and the shorter leg extends essentially perpendicular to these axes. The shorter leg of said L-shape comprises a bore, in which the clamping anvil 321 is supported. Different shapes for the support unit 320 are however possible. The support unit 320 could, for example, comprise multiple legs extending essentially parallel to the clamping axis 301 and the support axis 322, wherein the clamping force is distributed evenly across the multiple legs for minimizing the deformation of the support unit 320 and the overall clamping device 300 when the clamping force is applied.

The workpiece 2 is rotationally oriented along the reference path (not visible in figure 7) via a rotation about the clamping axis 301 by means of the actuation drive 302 while the laser beam (not visible) is being moved along the laser path 11, wherein the laser beam passes across the processing surface 5.

This invention is not limited to the embodiments described but may be varied in construction and detail.

## Claims

1. A method (100) for laser processing a processing surface (5) of a workpiece (2), comprising:
• generating a laser beam (205) propagating through a scanning unit (201) along a scanner axis (10),
• providing the workpiece (2) which is supported and held in a holder (210), and which is positionable relative to the scanner axis,
wherein the method (100) further comprises steps,
a) defining a processing volume (4) of the workpiece (2), which processing volume (4) extends in an essentially perpendicular direction from a processing surface (5),
b) defining a reference path (6), wherein the workpiece (2) is orientable with respect to said reference path (6),
c) defining a laser path (11), which is at least partially overlapping with the processing surface (5),
d) orienting the workpiece (2) with respect to the reference path (6),
e) moving the laser beam (205) along the laser path (11), wherein the laser beam (205) passes across the processing surface (5) and the processing volume (4) is removed from the workpiece (2) to expose a final surface (3),
and wherein the steps d) and e) are performed essentially simultaneously.

2. The method (100) according to claim 1, **characterized in that** the reference path (6) is defined by a feature of a partial processing surface (5') or by a feature of the final surface (3) of the workpiece (2), preferably a cutting edge.

3. The method (100) according to claim 1 or 2, **characterized in that** the laser path (11) intersects the reference path (6) in at least one intersection point (12), wherein the scanner axis (10) and an axis (8) perpendicular to the surface (3) of the workpiece (2), at said intersection point (12), enclose an angle (7) within a predetermined range.

4. The method (100) according to claim 3, **characterized in that** the angle (7, 7', 7") within a predetermined range remains constant for every iteration of step c).

5. The method (100) according to one of the preceding claims, **characterized in that** the direction of orientation of the workpiece (2) with respect to the reference path (6) and the direction of movement of the laser beam (205) are essentially orthogonal to each other.

6. The method (100) according to one of the preceding claims, **characterized in that** the laser path (11) is defined so as to achieve a homogeneous energy input across the processing surface (5).

7. The method (100) according to claim 6 **characterized in that** the homogeneous energy input is achieved through the laser path (11) being a superposition of at least two paths, preferably a superposition of a meander-shaped pattern and the reference path (6) or a superposition of a spiral pattern and the reference path (6).

8. The method (100) according to one of the preceding claims **characterized in that** the laser generation is being modulated depending on the relative position of the laser beam (205) on the laser path (11), preferably depending on the laser beam (205) passing across the processing surface (5).

9. The method (100) according to one of the preceding claims, **characterized in that** the workpiece (2) is a tool, preferably a cutting tool, even more preferably an indexable insert or a rotational cutting tool.

10. The method (100) according to one of the preceding claims, **characterized in that** the laser path (11) comprises at least one processing segment and at least one transfer segment, wherein the shape of the laser path (11) in the at least one processing segment is definable according to a first set of conditions and the shape of the laser path (11) in the at least one transfer segment is definable according to a second set of conditions.

11. The method (100) according to one of the preceding claims, **characterized in that** the workpiece (2) is clamped in a clamping device (300) by application of a clamping force parallel to a clamping axis (301) and is rotatable about the clamping axis for orienting the workpiece with respect to the reference path.

12. A clamping device (300) for clamping a workpiece (2) during laser processing of a processing surface (5), **characterized in that** the clamping device (300) comprises
• a drive unit (310) comprising a drive anvil (311) supported in an actuation drive (302), said drive anvil (311) being rotationally driveable for rotary orienting the workpiece (2) by means of the actuation drive (302), and
• a support unit (320) provided to be mounted on the drive unit and comprising a clamping anvil (321) rotatable about a support axis (322), and
wherein either or both of the drive anvil (311) and the clamping anvil (321) are translationally drivable to apply a clamping force parallel to a clamping axis (301) for clamping the workpiece between the drive anvil (311) and the clamping anvil (321).

13. A clamping device (300) for clamping a workpiece (2) during laser processing of a processing surface (5) according to claim 12, **characterized in that** the clamping anvil (321) is provided for supporting the clamping force and the drive anvil (311) is translationally drivable to apply the clamping force parallel to the clamping axis (301) for clamping the workpiece (2) between the drive anvil (311) and the clamping anvil (321).

14. A laser processing device (200) for laser processing a processing surface (5) of a workpiece (2) with the method (100) according to one of the claims 1 to 11, comprising
• a laser system with a scanner unit (201) comprising means to focus a laser beam (204) and at least one optical axis configured to generate a laser beam (205) along a scanner axis (10), to direct the laser beam (205) onto a workpiece (2) and to move the laser beam (205) along a defined laser path (11),
• a holder (210) for supporting and holding the workpiece (2) and movable about at least one mechanical axis by means of drive units (211) of the laser processing device (200), and
• a controller (220) configured to move the laser beam (205) along a defined laser path (11) and to control the drive units (211) to orient the workpiece (2) with respect to a reference path (6).

15. A laser processing device (200) for laser processing a processing surface (5) of a workpiece (2) according to claim 14, **characterized in that** it comprises a controller (220) to synchronously control both the at least one optical axis and the at least one mechanical axis.

16. A laser processing device (200) for laser processing a processing surface (5) of a workpiece (2) according to claim 14 or 15, **characterized in that** it comprises a clamping device (300) according to claim 12 or 13 for clamping the workpiece (2) during laser processing of the processing surface (5).
